# EUROPÄISCHE PATENTSCHRIFT

(11) **EP 0 667 319 B1**
(45) Veröffentlichungstag und Bekanntmachung des Hinweises auf die Patenterteilung: **04.11.1998**
(21) Anmeldenummer: 95101399.4
(22) Anmeldetag: 02.02.1995
(51) Int. Cl.: C02F 3/04, C02F 3/30, C02F 3/10

(54) **Verfahren und Reaktor zur mikrobiologischen Wasserbehandlung mit hohem Sauerstoffbedarf**
Process and reactor for the microbiological treatment of water with a high oxygen demand
Procédé et réacteur pour le traitement microbiologique de l'eau avec forte demande en oxygène

(30) Priorität: 07.02.1994 DE 4403716
(43) Veröffentlichungstag der Anmeldung: 16.08.1995
(73) Patentinhaber: Hahnewald GmbH, 01189 Dresden (DE)
(72) Erfinder: Haldenwang, Lutz, D-01445 Radebeul (DE); Fenk, Bernd, D-01324 Dresden (DE); Mietzsch, Christian, D-01187 Dresden (DE); Hahnewald, Dieter, D-01259 Dresden (DE)
(74) Vertreter: Hofmann, Klaus

(56) Entgegenhaltungen:
- DE-A- 3 123 155
- DE-A- 3 503 723
- DE-A- 3 631 817
- DE-A- 4 235 084
- DE-A- 4 307 672
- DE-U- 9 209 989

## Beschreibung

Die vorliegende Erfindung ist bei aeroben biologischen Verfahren der Wasseraufbereitung und Abwasserbehandlung einsetzbar, darüber hinaus auch bei Verfahren, in denen andere mikrobiologische Prozesse unter Anwesenheit von Sauerstoff durchgeführt werden sollen.

In den letzten Jahren wurden für die Trinkwasseraufbereitung und Abwasserbehandlung verstärkt Technologien entwikkelt, die auf biologischen Prozessen beruhen und die Stoffwechselleistungen natürlich vorkommender Mikroorganismen nutzen. Dabei sind Verfahren, in denen die Organismen durch Aufwuchs auf Trägermaterial im Reaktor zurückgehalten und konzentriert werden, den herkömmlichen Verfahren, in denen die Biomasse im Medium suspendiert oder in Form von Belebtschlammflocken vorliegt, deutlich überlegen.

Die Ausbildung eines Mikromilieus innerhalb des Biofilms an der Oberfläche des Trägermaterials und die große Verweilzeit im Reaktionsraum führen zu einer an die jeweiligen Bedingungen sehr gut angepaßten stabilen Mischpopulation mit hoher Aktivität.

Im Gegensatz zu anaeroben Reaktionen verlaufen aerobe Prozesse, in denen der Stoffwechsel über Oxidation des Substrates durch Sauerstoff vollzogen wird, mit einer um ein Vielfaches höherem Umsatzgeschwindigkeit. Aerobe Verfahren mit trägerfixierter Biomasse, wie z.B. belüftete Biofilter nach DE 35 17 600 A1 und DE 38 29 497 A1 und Wirbelschichtreaktoren nach EP 0 112 095 A1 und DE 38 29 873 A1, erreichen hohe Abbauleistungen bei einem nur geringen Platz- und Raumbedarf.

Ein erheblicher Problem dieser Technologien ist jedoch die Realisierung einer ausreichend hohen Belüftung, da Sauerstoff nur in gelöster Form von den Mikroorganismen aufgenommen werden kann und seine Löslichkeit in Wasser bzw. im Reaktionsmedium begrenzt ist. Besonders ungünstig macht sich bemerkbar, daß diese Löslichkeit gerade im Falle steigender Temperatur und dementsprechend steigender Bioaktivität noch weiter abnimmt. Es sind daher zur Gewährleistung eines ausreichend schnellen Sauerstofftransportes innerhalb des zu behandelnden Wassers zum Biofilm hin sehr hohe Luftdurchsätze erforderlich.

Da aber mit zunehmender Belüftung oder Zugabe von reinem Sauerstoff die Sauerstoffausnutzung immer weniger effektiv ist, ergeben sich für alle leistungsstarken Verfahren vergleichsweise sehr hohe Betriebskosten pro abgebauter Schadstoffmenge. Allein die Energiekosten für Belüftung und für die bei verschiedenen Verfahren dazu erforderliche Kreislaufführung des Reaktorinhaltes werden mit etwa 50% der Gesamtbetriebskosten angegeben.

Selbst bei Anwendung von Reaktortypen mit hoher Durchmischung bilden sich im Reaktionsraum Bereiche aus, in denen die Sauerstoffnachlieferung deutlich geringer oder ungenügend ist. So wird oftmals besonders bei Prozessen mit hohem Sauerstoffbedarf, wie z.B. bei der biologischen Nitrifikation und dem biologischen Phenolabbau, auch im Falle der Verwendung von reinem Sauerstoff die Abbauleistung durch eine nicht ausreichende Sauerstoffnachlieferung begrenzt.

Eine aktuelle Veröffentlichung DE 41 12 378 A1 beschreibt die Weiterentwicklung des bekannten Umlaufbegasungsverfahrens nach DD 56 763 mittels Kreislaufpumpe und selbständiger Gasansaugung durch eine höhenverstellbare Umlenkhaube und diverse Leitrohre. Aber auch dieser Vorschlag erfordert sowohl fertigungstechnisch als auch energetisch einen hohen zusätzlichen Aufwand.

Da unter vergleichbaren Bedingungen (20°C) der prozentuale Sauerstoffgehalt der Luft etwa 30mal größer ist als der des Wassers und außerdem in der Gasphase der Sauerstofftransport wesentlich rascher erfolgt als in der Flüssigphase, ist es günstig, den notwendigen Sauerstoff direkt mit dem Luftstrom in den Reaktor und an die mit den Mikroorganismen und einem Flüssigkeitsfilm umgebenen Aufwuchsträger heranzuführen.

Eine Gasstrombelüftung nicht eingestauter bewachsener Trägermaterialien erfolgt bis heute hauptsächlich in den bekannten Tropfkörpern zur Abwasserreinigung.

Das zu reinigende Abwasser wird dabei von oben auf eine Füllkörper-Schüttung gegeben, in welche durch natürliche Sogwirkung Außenluft eindringt. Da aber die Porenräume zwischen den Füllkörpern praktisch drucklos durchströmt werden, besteht die Gefahr, daß nachwachsende Mikroorganismen und entstehendes Biogas in kurzer Zeit zu einer vollständigen Verstopfung des Filters führen. Ein Abschlagen dieser überschüssigen Biomasse durch gezielte Rückspülungen ist nicht möglich. Um eine Verstopfung zu verhindern, muß die Biomassekonzentration auf einen niedrigen Wert gehalten werden.
Nach zahlreichen Untersuchungen und langjährigen Erfahrungen ist es deshalb heute international üblich unregelmäßige Füllkörper mit einer Einzelgröße zwischen 40 und 80 mm einzusetzen. Analog dazu wird bei der Verwendung regelmäßig geformter Kunststoff-Füllelemente mit einem Hohlraumvolumen bis zu 95% gearbeitet (DE 32 05 299 A1). Die Tropfkörpertechnik ist damit weitgehend verstopfungssicher, erreicht aber eine nur geringe Abbaugeschwindigkeit. Trotz der prinzipiell günstigen Bedingungen für die Sauerstoffversorgung der Biomasse erreichen die Tropfkörper nur eine Raumabbauleistung, welche deutlich unter der Leistung der oben beschriebenen Bioreaktoren liegt. Damit wird bereits für eine niedrige Abwasserfracht ein großes Reaktorvolumen notwendig.

Der vorliegenden Erfindung liegt das Problem zugrunde, daß der große Vorteil moderner Bioreaktoren zur aeroben Wasserbehandlung, die hohe Raumabbauleistung, durch die verhältnismäßig sehr hohen Betriebskosten für Sauerstoff und Sauerstoffeintrag weitgehend aufgehoben wird.

Aufgabe der Erfindung ist es deshalb, daß mittels eines Verfahrens und eines geeigneten Reaktors eine energetisch günstige und technisch einfache Belüftungstechnologie sowie eine Reduzierung des Reaktor-Fertigungsaufwandes angestrebt wird. Dabei soll eine Verstopfung des Trägerbettes durch Biomasse, Gasblasen oder Feststoffpartikel je nach durchgeführtem biologischen Prozeß verhindert oder durch eine einfache Rückspülung behoben werden.

Diese Aufgabe wird erfindungsgemäß mit dem Verfahrensanspruch 1 und dem Sachanspruch 4 gelöst. Hierbei wird als Aufwuchsträger für die Mikroorganismen ein körniges Material mit einer spezifischen Dichte kleiner als 0,5 g/cm³ verwendet. Aufgrund des geringen Gewichtes bildet das Trägermaterial ein unverändert locker aufeinander liegendes Bett aus, welches bei Bedarf allein durch eine kurzzeitige Starkluftspülung verwirbelt und damit von überschüssiger Biomasse befreit werden kann. Innerhalb des Trägermaterials wird die Verstopfung der Porenräume durch den künstlichen, kontinuierlichen Luftstrom von unten nach oben in Abhängigkeit vom biologischen Prozeß verzögert oder vollständig verhindert. Gleichzeitig führt die gerichtete Luftzugabe dazu, daß das ggf. mit Nährstoffen angereicherte Rohwasser innerhalb des Trägermaterialbettes in Form eines Aerosols fein verteilt wird und in einen ungehinderten, engen Kontakt mit dem im Überschuß vorhandenen Sauerstoff und den Mikroorganismen am Trägermaterial tritt.

Der mit der Erfindung erzielte Vorteil besteht insbesondere darin, daß statt der energieintensiven und aufwendigen Belüftung des Rohwassers oder eines mehrfachen Kreislaufstromes mit Druckluft oder reinem Sauerstoff, das einfache und kostengünstige Einblasen von Normalluft in den Reaktor hinein vollständig ausreicht. Dazu kann z.B. mit einem handelsüblichen Radialventilator mit einem vergleichsweise sehr geringem Energieverbrauch gearbeitet werden.

Aufgrund der nur kurzen Transportwege in dem die bewachsenen Träger umgebenden Flüssigkeitsfilm herrschen sehr günstige Bedingungen für den Sauerstoffaustausch. Durch den Gasstrom wird von unten nach oben gleichmäßig in alle Bereiche des Reaktors kontinuierlich Sauerstoff nachgeführt. Unterstützt durch die ständige Erneuerung der Gasphase sowie die große Grenzfläche zwischen Gasphase und Flüssigphase am Trägermaterialkorn kann auf diese Weise ein Gelöstsauerstoffgehalt im Flüssigkeitsfilm von nahezu 100% des Sättigungswertes aufrechterhalten werden. Damit ist auch bei sehr hoher Bioaktivität in allen Bereichen des Reaktors jederzeit eine ausreichende Nachlieferung von Sauerstoff bis in die tiefer liegenden Zellschichten innerhalb des Biofilms hinein gewährleistet.

Als günstiger Nebeneffekt ergibt sich daraus, daß das normalerweise übliche Betriebssystem zur Kontrolle der Gelöstsauerstoffkonzentration entfallen kann.

Die im Wasser gelösten Schadstoffe sowie die entsprechend zudosierten Nährstoffe werden durch die Verrieselung von oben nach unten und die mit einer Mindestgeschwindigkeit im Gegenstrom geführte Luft sehr fein verteilt und kommen ebenfalls unmittelbar und nach nur minimalen Transportwegen im Flüssigkeitsfilm mit den Mikroorganismen direkt in Kontakt.

Obwohl das körnige Trägermaterial mit seiner großen Aufwuchsfläche eine sehr hohe Biomassekonzentration im Reaktor und eine dementsprechend hohe Raumabbauleistung gewährleistet, arbeitet der Reaktor aufgrund der definierten Luftströmung innerhalb des Trägermaterialbettes und der Möglichkeit zur einfachen Rückspülung vollständig verstopfungssicher. Durch kurze Diffusionswege werden die Bakterien über nahezu die gesamte Schichtdicke des Biofilms mit Nährstoffen und Substraten versorgt und sind am Stoffwechsel beteiligt.

Die Kosten für die kontinuierliche Luftzufuhr sind im Vergleich mit den Kosten für die Sauerstoffnachlieferung anderer biologischer Verfahren extrem niedrig.

Das Aufwuchsträgermaterial wird durch einen Siebboden, z.B. ein Stahlgitterrost mit einer Kiesschicht, sowie die höhenverstellbare Gestaltung des Ablaufs nach dem Überlaufprinzip auf einfache Weise vollständig und sicher im Reaktionsraum zurückgehalten.

Aufgrund des nur geringen Druckverlustes im Trägermaterial-Bett ist es möglich, die Höhe des Reaktors zu steigern und dementsprechend die Fläche des Querschnitts zu verringern. Damit kann die für den optimalen Luftstrom (m³ Luft/m² Fläche) notwendige Energie noch weiter verringert werden. Der Reaktor kann dafür z.B. in mehreren Teilreaktoren ausgeführt werden, die vom Rohwasser parallel durchrieselt und vom Luftstrom nacheinander jeweils von unten nach oben durchströmt werden.

In der Praxis stellt sich häufig die Aufgabe, zwei in ihren Bedingungen voneinander abweichende biologische Reinigungsschritte zu kombinieren. Deshalb ist es sehr vorteilhaft, daß sich nach Anspruch 9 der vorliegenden Erfindung verschiedene biologische Reaktionen kontinuierlich und mit nur geringem zusätzlichen Aufwand im gleichen Reaktor durchführen lassen. Dies gilt auch für Prozesse, die so unterschiedliche Bedingungen erfordern, wie der biologische Abbau von Ammonium zu Nitrat (Nitrifikation) unter aeroben Bedingungen und der Abbau des gebildeten Nitrats zu gasförmigem Stickstoff (Denitrifikation) unter anaeroben Bedingungen. Für die Reinigung industrieller Abwässer besteht oftmals die Notwendigkeit, leicht flüchtige Inhaltsstoffe durch Begasen des Wassers auszutreiben. Bei Anwendung der vorliegenden Technologie stellt sich mit Anwesenheit derartiger Schadstoffe ein solcher Stripp-Effekt automatisch ein und unterstützt den biologischen Abbau.

Ein weiterer wichtiger Vorteil der Erfindung ist die Möglichkeit, den erfindungsgemäßen Reaktor in extrem leichter Bauweise ausführen zu können. Dies ist möglich, weil der Reaktormantel mit Ausnahme der Bodenzone nur als einfache Hülle für die im Gasstrom wirbelnden körnigen Aufwuchsträger dient. Günstig ist weiterhin, daß eine Behinderung des Prozesses durch die bei vielen Verfahren störende Schaumbildung nicht eintreten kann und die Einrichtung eines entsprechenden Freiraumes mit einer speziellen Vorrichtung zur Schaumvermeidung am Kopf des Reaktors nicht notwendig ist.

Mit der vorgeschlagenen Erfindung können im Vergleich zum Stand der Technik bei gleicher biologischer Abbauleistung sowohl die Investitionskosten als auch die Betriebskosten erheblich gesenkt werden.

In den Zeichnungen sind zwei Ausführungsbeispiele der Erfindung dargestellt. Es zeigen:

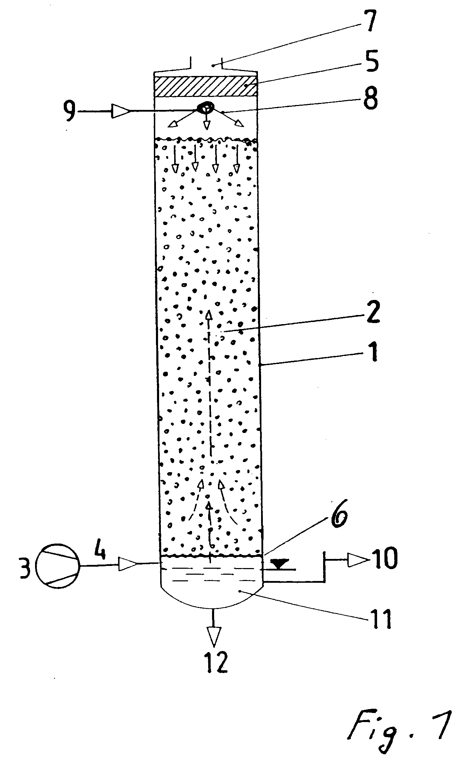

- Fig. 1: belüfteter Reaktor zur aeroben Wasserbehandlung
- Fig. 2: wie Fig. 1, jedoch mit erweitertem unbelüfteten Reaktionsraum zur zusätzlichen anaeroben Wasserbehandlung.

### Ausführungsbeispiel 1

In der Rauchgasentschwefelungsanlage eines Kraftwerkes fallen Abwässer mit einem Ammoniumgehalt von durchschnittlich 50 mg/l NH₄-N an. Diese Konzentration soll durch biologische Nitrifikation auf kleiner als 5 mg/l NH₄-N im Reinwasser abgebaut werden.

Da für den bakteriellen Abbau von Ammonium (NH₄-N) zu Nitrat (NO₃-N) die 4,6-fache Menge Sauerstoff notwendig ist, müssen dafür pro Liter Abwasser mindestens 230 mg Sauerstoff bereitgestellt werden.

Durch Anwendung der vorliegenden Erfindung kann eine aufwendige Kreislaufführung des Wassers mit energieintensiver Belüftungsvorrichtung vermieden werden.

Ein zylinderförmiger Reaktor 1 enthält als Aufwuchsträgermaterial für die Nitrifikanten 70 Vol% Flocken aus handelsüblichem Schaumpolystyren einer Dichte von 0,02 g/cm³ und einer Körnung zwischen 4 und 8 mm in Form eines locker liegenden Bettes 2. Die zur feinen Verteilung des Rohwassers, zur Sauerstoffversorgung der Biomasse und zur Freihaltung der Porenräume notwendige Luft wird mit einer Geschwindigkeit von 1100 m³/m² x h über einen Radialventilator 3 und drei im Abstand von 120° angeordnete Stutzen 4 im unteren Bereich des Reaktors 1 eingetragen. Ein Stahlgitterrost 6 mit einer Schicht aus Kies mit einer Körnung von 10 - 20 mm hält das Trägermaterialbett 2 und gewährleistet eine gleichmäßige Verteilung der über die Stutzen 4 eingetragenen Luft. Zur Entfeuchtung der Luft dient ein vor der Gasaustrittsöffnung 7 am Kopf des Reaktors angebrachtes Demister 5 (Tröpfchenabscheider).

Über ein System zur Verdüsung 8 erfolgt die Zugabe des mit Nährstoff (Phosphat) angereicherten Rohwassers 9.

Der Ablauf für das Reinwasser 10 ist nach dem Überlaufprinzip gestaltet, so daß ggf. auf die Wasseroberfläche auftreffende Trägerteilchen vom eingestauten Wasserkörper 11 im unteren Teil des Reaktors 1 zurückgehalten werden. Im Boden befindet sich ein Stutzen 12 für den Abzug des überschüssigen Bioschlammes.

### Ausführungsbeispiel 2

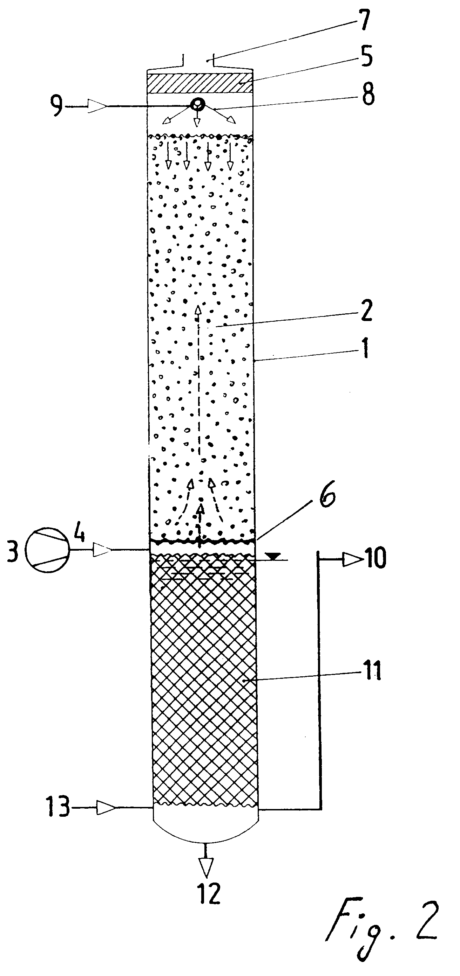

Die bei Durchführung des im Ausführungsbeispiel 1 beschriebenen Verfahrens entstehende Nitratbelastung des Wassers ≥ 45 mg/l NO₃-N soll durch biologische Denitrifikation abgebaut werden. Da Nitrat nur unter anaeroben Bedingungen bakteriell abgebaut wird, ist neben dem Raum für Nitrifikation ein zweiter Reaktionsraum nötig.
Um Kosten und Grundfläche für einen weiteren Reaktor zu sparen, wird zur Lösung dieser Aufgabe die vorliegende Erfindung in Form des in Figur 2 dargestellten Reaktors angewendet.

Gegenüber Ausführungsbeispiel 1 besitzt der Reaktor ein wesentlich vergrößertes Unterteil mit einem eingestauten Wasserkörper 11, welcher als Aufwuchsträgermaterial für die Denitrifikanten 80 Vol% des Schwimmkornes Gesintertes Schaumpolystyren nach DD 261 921 mit einer Dichte von 0,67 g/cm³ und einer Körnung zwischen 2 und 6 mm enthält. Es existiert somit innerhalb des Wasserkörpers 11 ein biologisch aktives, schwimmendes Filterbett, welches unten oberhalb des Ablaufstutzens 10 endet und oben bis dicht über die Wasseroberfläche reicht. In ihm werden der Gelöstsauerstoff-gehalt und parallel dazu die Nitratbelastung des nitrifizierten Wassers auf minimale Werte abgebaut. Als Nährstoff wird am Übergang zwischen den Betten aus Schaumpolystyren und aus Gesintertem Schaumpolystyren Ethanol zugegeben.

In der Nähe des Reaktorbodens befinden sich zusätzlich zum Schlammabzug 12 Anschlüsse 13 für eine periodische Reinigung des Materials von überschüssiger Biomasse mit Spülluft.

## Patentansprüche

1. Verfahren zur mikrobiologischen Wasserbehandlung mit hohem Sauerstoffbedarf in Reaktoren mit körnigem Trägermaterial, dadurch gekennzeichnet,
daß das ggf. mit Nährstoffen angereicherte Rohwasser von oben nach unten ein Aufwuchsträgermaterial für aerobe Mikroorganismen durchrieselt, welches eine spezifische Dichte kleiner als 0,5 g/cm³ sowie eine Korngröße kleiner als 10 mm besitzt und von unten nach oben kontinuierlich von einem künstlich erzeugten Luftstrom von mindestens 500 m³/m² x h derart durchströmt wird, daß das Rohwasser innerhalb des Trägermaterials in Form eines Aerosols gleichmäßig und fein verteilt wird und daß ein Verschluß der Porenräume durch entstehende Biomasse und Biogas verzögert oder vollständig verhindert wird.

2. Verfahren nach Anspruch 1, dadurch gekennzeichnet,
daß das zu behandelnde Wasser in einer zweiten Reaktorstufe unterhalb des Trägermaterial-Bettes durch ein zweites körniges Trägermaterial innerhalb eines eingestauten Wasserkörpers geleitet und unter anaeroben Bedingungen behandelt wird.

3. Verfahren nach Anspruch 2, dadurch gekennzeichnet,
daß dem Wasser vor Passage der zweiten Reaktorstufe Nährstoffe zugegeben werden.

4. Reaktor zur mikrobiologischen Wasserbehandlung mit hohem Sauerstoffbedarf zur Durchführung des Verfahrens nach Anspruch 1, dadurch gekennzeichnet,
daß der mit einem körnigen Trägermaterial für den Aufwuchs von aeroben Mikroorganismen gefüllte Reaktor (1) im unteren Teil einen Siebboden (6), eine Belüftungseinrichtung (3) und Zuführstutzen (4) zum kontinuierlichen und definierten Eintrag einer nach Anspruch 1 ausreichenden Menge Luft sowie im oberen Teil eine entsprechende Gasaustrittsöffnung (7) mit einem Tropfenabscheider (5) besitzt, und daß im oberen Teil des Reaktors (1) eine Verteilereinrichtung (8) für eine kontinuierliche Zugabe und gleichmäßige Durchrieselung des Trägermaterialbettes (2) mit dem zu behandelnden Rohwasser (9) und im unteren Teil ein Ablauf (10) angeordnet sind.

5. Reaktor nach Anspruch 4, dadurch gekennzeichnet,
daß die Belüftungseinrichtung (3) ein handelsüblicher Ventilator ist.

6. Reaktor nach den Ansprüchen 4 und 5, dadurch gekennzeichnet,
daß der Siebboden (6) ein Stahlgitterrostes mit einer Kiesschicht ist.

7. Reaktor nach den Ansprüchen 4 bis 6, dadurch gekennzeichnet, daß der Reaktor (1) als Aufwuchsträgermaterial (2) handelsübliches Schaumpolystyren in Form von Flocken oder Kugeln enthält.

8. Reaktor nach den Ansprüchen 4 bis 7, dadurch gekennzeichnet, daß der Reaktor (1) unterhalb der Zuführstutzen (4) eingestaut ist und der Ablauf (10) höhenverstellbar nach dem Überlaufprinzip gestaltet ist.

9. Reaktor nach den Ansprüchen 4 bis 8, zur Durchführung des Verfahrens nach Anspruch 2, dadurch gekennzeichnet, daß der Reaktor (1) im eingestauten Wasserkörper (11) ein zweites Aufwuchsträgermaterial enthält, welches schwimmfähig ist und eine Dichte größer als 0,3 g/cm³ besitzt, und daß im Bodenbereich des Reaktors 1 ein Schlammabzug (12) und einen Anschluß (13) für eine periodische Reinigung mit Spülluft und/oder Spülwasser angeordnet sind.

10. Reaktor nach den Ansprüchen 4 bis 9, dadurch gekennzeichnet,
daß der Reaktor (1) aus mehreren Teilreaktoren besteht, welche vom Rohwasser (9) parallel durchrieselt und von dem durch eine Belüftungseinrichtung (3) erzeugten Luftstrom jeweils von unten nach oben nacheinander durchströmt werden.

## Claims

1. A process for microbiological treatment of water with a high oxygen demand in reactors with a granular substrate material, characterized in that the raw water, optionally enriched with nutrients, trickles from top to bottom through a growth substrate material for aerobic microorganisms having a specific density of less than 0.5 g/cm³ and a grain size smaller than 10 mm, and a continuous artificially generated air stream of at least 500 m³/m²·h flows through it from bottom to top; the raw water is finely and uniformly distributed in the substrate material in the form of an aerosol, and blockage of the pore spaces by the resulting biomass and biogas is delayed or completely prevented.

2. A process according to Claim 1, characterized in that the water to be treated is passed through a second granular substrate material below the substrate material bed in a second reactor stage within a dammed-up body of water and is treated there under anaerobic conditions.

3. A process according to Claim 2, characterized in that nutrients are added to the water before it passes through the second reactor stage.

4. A reactor for microbiological treatment of water with a high oxygen demand for carrying out the process according to Claim 1, characterized in that the reactor (1) filled with a granular substrate material for growth of aerobic microorganisms has in the lower part a sieve plate (6), an aeration device (3) and inlet connections (4) for continuous and defined input of a sufficient amount of air according to Claim 1, and in the upper part it has a corresponding gas outlet opening (7) with a mist collector (5), and in the upper part of the reactor (1) it has a distributor device (8) for continuous addition and uniform trickle of the raw water (9) to be treated through the bed (2) of substrate material, and a drain (10) is arranged in the lower part.

5. A reactor according to Claim 4, characterized in that the aeration device (3) is a commercial fan.

6. A reactor according to Claims 4 and 5, characterized in that the sieve plate (6) is a steel grating with a bed of gravel.

7. A reactor according to Claims 4 through 6, characterized in that the reactor (1) contains commercial polystyrene foam in the form of flakes or beads as the growth substrate material (2).

8. A reactor according to Claims 4 through 7, characterized in that the reactor (1) is dammed up below the inlet connections (4), and the drain (10) is adjustable in height according to the overflow principle.

9. A reactor according to Claims 4 through 8 for carrying out the process according to Claim 2, characterized in that the reactor (1) contains a second growth substrate material which is floatable and has a density higher than 0.3 g/cm³ in the dammed-up body of water (11), a sludge outlet (12) and a connection (13) for a periodic cleaning with flushing water and/or purging air are arranged in the bottom area of reactor (1).

10. A reactor according to Claims 4 through 9, characterized in that the reactor (1) comprises multiple component reactors through which raw water (9) trickles in parallel and a stream of air produced by an aeration device (3) flows from bottom to top in succession.

## Revendications

1. Procédé de traitement microbiologique de l'eau à fort besoin en oxygène, dans des réacteurs contenant un matériau support granulaire, caractérisé en ce que l'eau brute éventuellement enrichie de matières nutritives ruisselle de haut en bas à travers un matériau support d'accroissance pour des micro-organismes aérobies qui présente une densité spécifique inférieure à 0,5 g/cm³, ainsi qu'une granulométrie inférieure à 10 mm, et est parcouru en continu, de bas en haut, par un courant d'air d'au moins 500 m³/m² x h produit artificiellement, de telle façon que l'eau brute soit répartie uniformément et finement au sein du matériau support, sous forme d'aérosol, et qu'une obturation des cavités des pores par de la biomasse et du biogaz en formation soit retardée ou complètement empêchée.

2. Procédé selon la revendication 1, caractérisé en ce que l'eau à traiter est conduite dans un second palier de réacteur en dessous du lit de matériau support, au travers d'un second matériau support granulaire se trouvant à l'intérieur d'un corps aqueux accumulé, et est traitée dans des conditions anaérobies.

3. Procédé selon la revendication 2, caractérisé en ce que des matières nutritives sont ajoutées à l'eau avant son passage par le second palier de réacteur.

4. Réacteur pour le traitement microbiologique de l'eau à fort besoin en oxygène, pour la mise en oeuvre du procédé selon la revendication 1, caractérisé en ce que le réacteur (1) rempli d'un matériau support granulaire pour l'accroissance de micro-organismes aérobies présente, en partie basse, un fond filtrant (6), un aérateur (3) et des tubulures d'amenée (4) pour l'apport continu et défini d'une quantité d'air suffisante conformément à la revendication 1, et en partie haute, un orifice de sortie de gaz (7) correspondant avec un dévésiculeur (5), et en ce qu'en partie haute du réacteur (1), on a prévu un distributeur (8) pour une addition continue et un ruissellement régulier au travers du lit de matériau support (2) par l'eau brute (9) devant être traitée, et en partie basse, un orifice d'écoulement (10).

5. Réacteur selon la revendication 4, caractérisé en ce que l'aérateur (3) est un ventilateur de type courant dans le commerce.

6. Réacteur selon les revendications 4 et 5, caractérisé en ce que le fond filtrant (6) est une grille de treillis d'acier avec une couche de graviers.

7. Réacteur selon les revendications 4 à 6, caractérisé en ce que le réacteur (1) comprend, comme matériau support d'accroissance (2), du polystyrène expansé du type courant dans le commerce, sous forme de flocons ou de billes.

8. Réacteur selon les revendications 4 à 7, caractérisé en ce que le réacteur (1) est localisé sous la tubulure d'amenée (4) et en ce que l'orifice d'écoulement (10) est déplaçable en hauteur selon le principe du trop-plein.

9. Réacteur selon les revendications 4 à 8, pour la mise en oeuvre du procédé selon la revendication 2, caractérisé en ce que le réacteur (1) se trouvant dans le corps aqueux accumulé (11) contient un second matériau support d'accroissance, lequel est flottable et présente une densité supérieure à 0,3 g/cm³, et en ce que dans la région du fond du réacteur (1), on a prévu un point d'évacuation de boues (12) et un raccord (13) en vue d'un nettoyage périodique avec de l'air de rinçage et/ou de l'eau de rinçage.

10. Réacteur selon les revendications 4 à 9, caractérisé en ce que le réacteur (1) se compose de plusieurs réacteurs divisés lesquels sont traversés en parallèle par l'eau brute (9) et par le courant d'air produit par l'aérateur (3), respectivement , de bas en haut et les uns après les autres.
